# EUROPEAN PATENT SPECIFICATION

(11) **EP 1 568 536 B1**
(45) Date of publication and mention of the grant of the patent: **18.06.2008**
(21) Application number: 05003774.6
(22) Date of filing: 22.02.2005
(51) Int. Cl.: B60N 2/30, B60N 2/36, B60N 2/06

(54) **Vehicle seat**
Fahrzeugsitz
Siège de véhicule

(30) Priority: 27.02.2004 JP 2004053903
(43) Date of publication of application: 31.08.2005
(73) Proprietor: Honda Motor Co., Ltd., Tokyo (JP); Tachi-S Co., Ltd., Akishima-shi, Tokyo (JP)
(72) Inventor: Watanabe, Shinsuke, 4-1, Chuo 1-chome Wako-shi Saitama-ken (JP); Ohta, Yohei, Akishima-shi Tokyo (JP)
(74) Representative: Prechtel, Jörg

(56) References cited:
- US-A- 3 703 310
- US-A- 5 570 931
- US-A- 5 588 707
- US-A- 6 113 191

## Description

### BACKGROUND OF THE INVENTION

### Field of the Invention

The present invention relates to a vehicle seat that allows dive down accommodation, in which the seat is moved down toward a lower floor.

### Description of the Related Art

Technology exists that relates to a vehicle seat that allows dive down accommodation, in which the seat is moved down toward a lower floor. In this technology, after tilting a seatback forward toward the seat cushion by operating a reclining lever that is provided on the side of the bottom part of the seatback, an attachment and release mechanism that is provided on the bottom side of the front portion of the seat cushion is released from the floor by pulling a pull-ring provided on the backside of the seatback, which functions as the top side when in the tilted state. In this state, the seat is moved down toward the lower floor by rocking the seat in the forward direction under the guidance of an arm provided on the bottom side of the front portion of the seat cushion (refer, for example, Japanese Unexamined Patent Application, First Publication, No. 2003-118446).

However, in the vehicle seat described above, in order to carry out the dive down accommodation of the seat, it is necessary to separately operate the reclining lever and the pull-ring, and thus there is room for further improvement in terms of simplifying the operation.

US-A-5,570,931 shows a seat for a vehicle in accordance with the preamble of claim 1.

### SUMMARY OF THE INVENTION

Therefore, an object of the present invention is to provide a vehicle seat that allows simplifying the operation during the dive down accommodation.

In order to achieve the above object, the present invention provides a seat for vehicle, comprising: a seat cushion; a front support member movably supporting the seat cushion on a lower floor of the vehicle; a seatback; a seatback support device movably supporting the seatback on an upper floor located backward in the vehicle with respect to the lower floor; a dive down interlocking device connected to the seat cushion and the seatback, and adapted to move the seat cushion toward the lower floor when the seatback is pivoted forward in the vehicle; and an operating device provided on an upper portion of the seatback, and operatively connected to the dive down interlocking device, wherein the seatback support device comprises: a support pivotably supporting the seatback; and a sliding device attached to the upper floor to slidably support the support, and having a locking mechanism; characterized by a slide lock releasing device connected to the locking mechanism, and adapted to release locking by the locking mechanism when the seatback is pivoted forward in the vehicle.

In the seat for a vehicle described above, the sliding device may include: a slide rail fixed to the upper floor; and a slider supporting the support, and movable along the slide rail.

In the seat for a vehicle described above, the slide rail may be made inclined such that a front portion of the slide rail is located lower in the vehicle than a rear portion thereof.

In the seat for a vehicle described above, the seat cushion may be made movable toward the lower floor when the slider is located at a frontmost position with respect to the slide rail.

The seat for a vehicle described above may further include: a slide lock release operating device provided at a front portion of the seat cushion, and connected to the locking mechanism to release locking by the locking mechanism.

In the seat for a vehicle described above, the operating device and the slide lock release operating device are disposed in the same side in a lateral direction of the vehicle. According to the present invention, when an operating device provided on the upper part of the seatback is operated, the dive down interlocking device simultaneously enables the forward tilting operation of the seatback and the move-down operation of the entire seat toward the lower floor. Thereby, in this state, by tilting the seatback forward, with the seatback in the forward tilted state, the entire seat is accommodated by being moved down toward the lower floor. In this manner, by the operation of a single operating device, the forward tilting operation of the seatback and move-down operation of the entire seat toward the lower floor, which are interlocked, are enabled, and it is possible to simplify the operation during the dive down accommodation.

In addition, according to the present invention, when the operating device provided on the upper part of the seatback is operated, the dive down interlocking device simultaneously enables the forward tilting operation of the seatback and the move-down operation of the entire seat toward the lower floor. Additionally, when, in this state, the seatback is tilted forward, the slide lock releasing device releases the slide lock, and the sliding of the entire seat to the front end position is enabled. Thus, in this state, because the entire seat slides up to the front end position and the seatback is tilted forward, the entire seat can be accommodated by moving down toward the lower floor while the seatback is tilted forward. In this manner, operation of a single operating device enables the forward tilting operation of the seatback, the sliding of the entire seat to the front end position, and the move-down operation of the entire seat toward the lower floor. Therefore, the operation during the dive down accommodation can be simplified even in the case in which the move-down operation of the seat toward the lower floor is enabled when sliding is made possible and the seat is at the front end position of the slide.

In addition, according to the present invention, when the operating device provided on the upper part of the seatback is operated, the dive down interlocking device enables the forward tilting operation of the seatback and the move-down operation of the entire seat toward the lower floor, which are interlocked. At the same time, when the slide lock release operating device provided on the front portion of the seat cushion is operated, the slide lock is released, and the sliding of the entire seat to the front end position is enabled. Thus, the seat slides to the front end position by operating the slide lock release operating device and the seatback is tilted forward by operating the operating device, while the passenger grasps from the side the operating device with one hand and the slide lock release operating device with the other hand. Thereby, the seatback is accommodated by being moved down toward the lower floor while tilted forward. Because the slide lock release operating device is provided on the front portion of the seat cushion and the operating device is provided on the upper part of the seatback, the passenger can grasp these simultaneously from the side without considerable efforts. Furthermore, in this state, the operation of sliding forward and the forward tilting operation of the seatback are simplified. Therefore, the operation during the dive down accommodation can be simplified even in the case in which sliding is made possible and the move-down operation of the seat toward the lower floor is enabled when the seat is at the front end position of the slide.

In addition, according to the present invention, the operating device and the slide lock release operating device are provided on the same side in the transverse direction of the vehicle, and thus the passenger can easily grasp them simultaneously, and it is possible to further simplify the operation during the dive down accommodation.

In addition, according to the present invention, because the slide rails incline downward toward the front, the sliding of the seat to the front end position is facilitated, and as a result, it is possible to simplify the operation during the dive down accommodation even further.

### BRIEF DESCRIPTION OF THE DRAWINGS

FIG. 1 is a perspective view showing a state of a three-person seat that includes a center seat, which is an embodiment of the vehicle seat of the present invention.
FIG 2 is a side cross-sectional view showing the state of the center seat that is an embodiment of the vehicle seat of the present invention.
FIG. 3 is a side cross-sectional view showing the state of a link mechanism for the center seat that is an embodiment of the vehicle seat of the present invention.
FIG. 4 is a side cross-sectional view showing the reclining lever for the center seat that is an embodiment of the vehicle seat of the present invention.
FIG. 5 is a frontal cross-sectional view showing the reclining lever for the center seat that is an embodiment of the vehicle seat of the present invention.
FIG. 6 is a side cross-sectional view showing the slide lever for the center seat that is an embodiment of the vehicle seat of the present invention.
FIG. 7 is a side cross-sectional view showing a different state of the link mechanism for the center seat that is an embodiment of the vehicle seat of the present invention.
FIG. 8 is a side cross-sectional view showing a different state of the center seat that is an embodiment of the vehicle seat of the present invention.
FIG. 9 is a side cross-sectional view showing another different of the center seat that is an embodiment of the vehicle seat of the present invention.
FIG. 10 is a perspective view showing a different state of the three-person seat that includes the center seat that is the embodiment of the vehicle seat of the present invention.

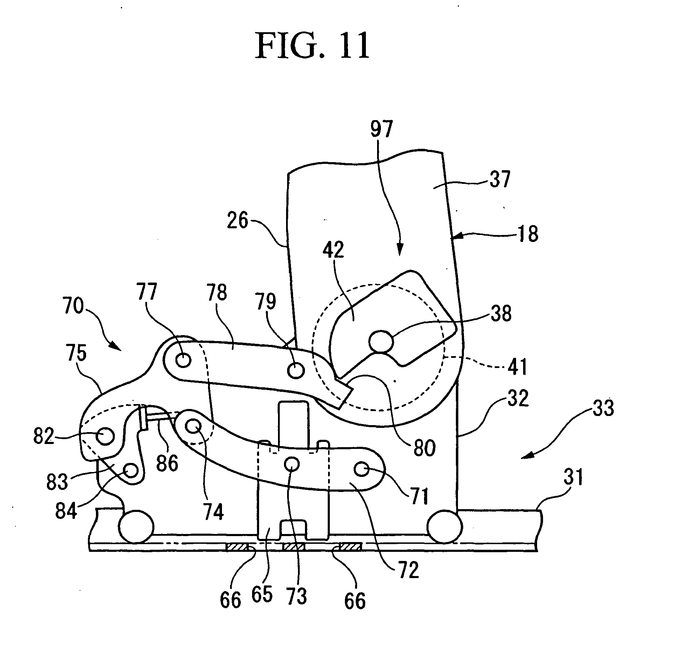

FIG. 11 is a side cross-sectional view showing another different state of the link mechanism for the center seat that is an embodiment of the vehicle seat of the present invention.

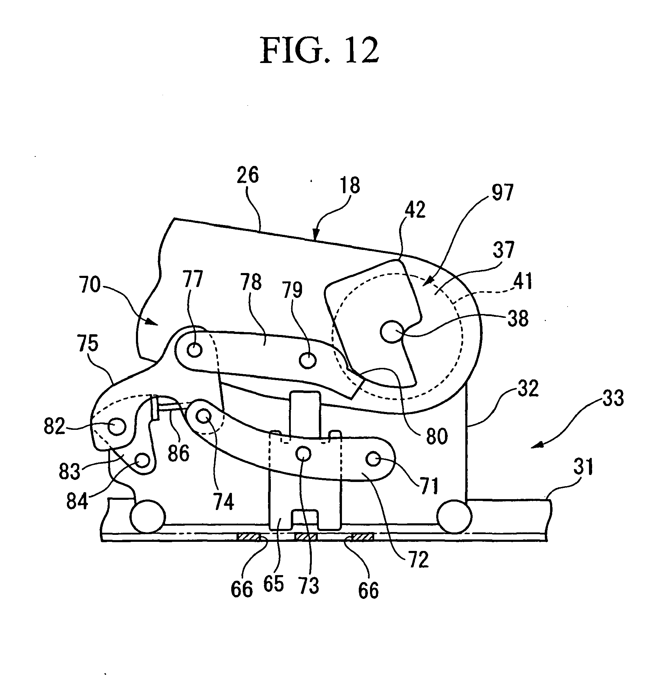

FIG 12 is a side cross-sectional view showing yet another different state of the link mechanism for the center seat that is an embodiment of the vehicle seat of the present invention.
FIG. 13 is a side cross-sectional view showing yet another different state of the center seat that is an embodiment of the vehicle seat of the present invention.
FIG. 14 is a side cross-sectional view showing yet another different state of the center seat that is an embodiment of the vehicle seat of the present invention.
FIG. 15 is a perspective view showing a three-person seat that includes a modified example of the center seat that is an embodiment of the vehicle seat of the present invention.

### DETAILED DESCRIPTION OF THE INVENTION

An embodiment of the vehicle seat of the present invention will be explained below with reference to the figures. Note that in the following explanation, the terms longitudinal (back to front) and transverse (left to right) respectively denote the lengthwise and widthwise directions of the vehicle in forward motion.

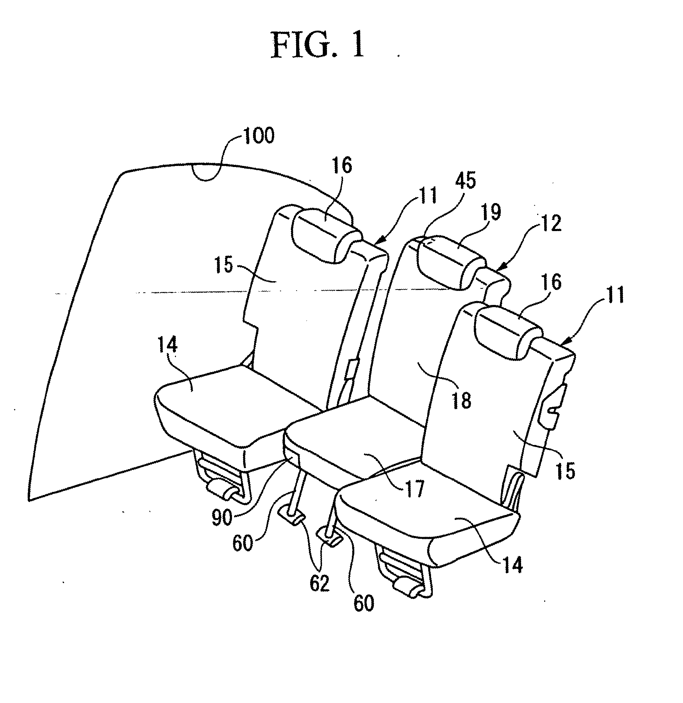

FIG 1 shows a three-person seat in the rear row that has a pair of side seats 11, which are disposed on the left and the right, and a center seat 12, which is disposed between these side seats 11. The present invention is applied to the center seat 11 among the three-person seats in the back row, but it can naturally be applied to any of the seats in the front row, the back row, the sides, or the center.

Each of the pair of left and right side seats 11 has a seat cushion 14, a seatback 15 that is connected to the back end side of the seat cushion 14, and a head rest 16 provided on the seatback 15 at a location opposite to the seat cushion 14, and a center seat 12 provided between both of the side seats 11 also has a seat cushion 17, a seatback 18 that is connected to the back end side of the seat cushion 14, and a head rest 19 that is provided on the side of the seatback 18 that is opposite to the seat cushion 17. Note that, as shown in FIG 1, the V-shaped seat layout in which the center seat 16 is positioned toward the back side with respect to both side seats 11 is possible.

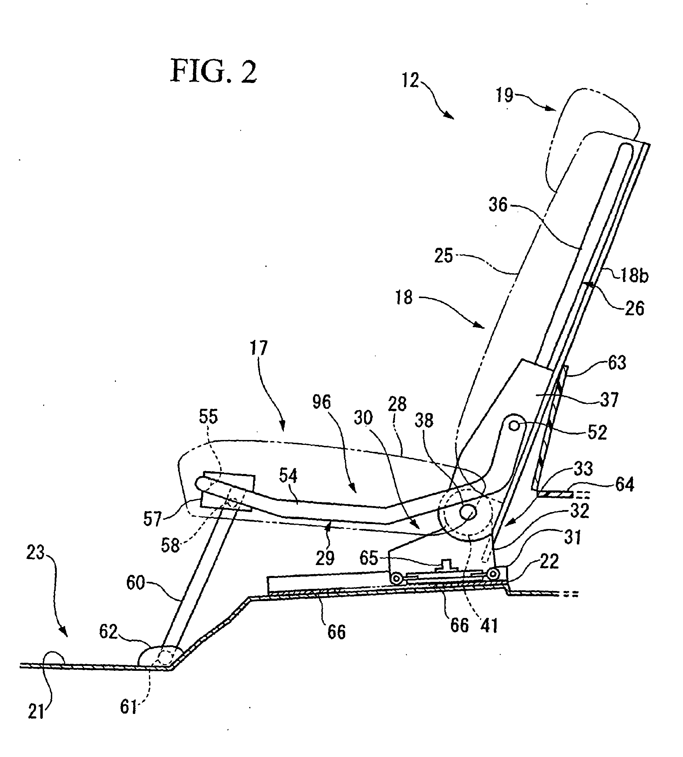

As shown in FIG. 2, along with both side seats 11, the center seat 12 is provided on a stepped floor 23 that has a structure in which a lower floor 21 at the front side and a upper floor 22 at the back side, which is higher than the lower floor 21, are adjacent to each other in the vehicle cabin. Note that the upper floor 22 is slightly inclined downward toward the front.

The seatback 18 of the center seat 12 includes a seatback pad 25 that is flexible and supports the back of the passenger, and a seatback frame 26 that supports the seatback pad 25.

In addition, the seat cushion 17 of the center seat 12 includes a seat cushion pad 28 that is flexible and supports the hips of the passenger, and a seat cushion frame 29 that supports the seat cushion pad 28.

Additionally, a pair of transversely separated slide rails 31 (only one side is illustrated here) aligned in the longitudinal direction is provided on the upper floor 22, and these slide rails 31 support the sliders 32, which allow sliding only in the longitudinal direction. These slide rails 31 and the sliders 32 form a slide mechanism 33, which allows the center seat 12 to slide. Because the upper floor 22 is inclined slightly downward, both of the slide rails 31 that are fastened to the upper floor 22 also incline slightly downward.

The seatback frame 26 includes a back frame body 36 that mainly supports the seatback pad 25, and a pair of support parts 37 (only one of them is illustrated here) fastened to one side (bottom) of the back frame body 36 in the lengthwise direction on both the left and right sides so as to extend from the back frame body 36 toward the outside along the lengthwise direction, and support axles 38 (only one of them is illustrated here) extending in the transverse direction, are provided on the distal end side of the extension of the support part 37. In addition, the seatback frame 26 is supported on the sliders 32 on both sides via these support axles 38 so as to be able to rotate. Thereby, the seatback frame 26, that is, the seatback 18 that includes this seatback frame 26, can transition from a substantially vertical upright position to a forward tilted position by rotating with respect to the sliders 32 centered on the support axles 38. In other words, the seatback 18 pivots so as to be able to tilt forward on the sliders 32, which slide while being guided by the slide rails 31. The slide mechanism 33 and the support axles 38 constitute a seatback support device 30.

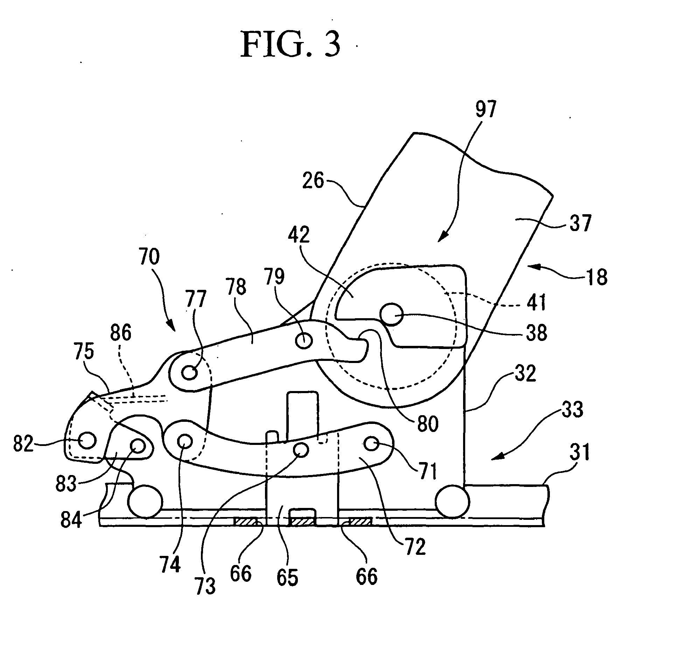

Note that on the sliders 32 and the support parts 37 of the seatback frame 26, a reclining mechanism 41 is provided. The reclining mechanism 41 can fasten or release the seatback frame 26, that is, the seatback 18, in the upright position with respect to the sliders 32. In addition, an actuation cam 42, shown in FIG. 3, is mounted on the seatback frame 26 at a position on the center axis of the support axles 38 in the support part 37.

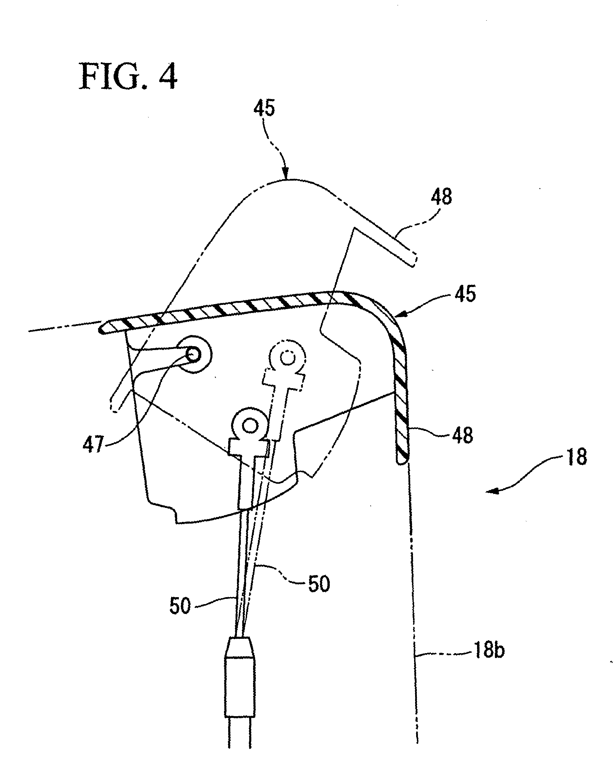

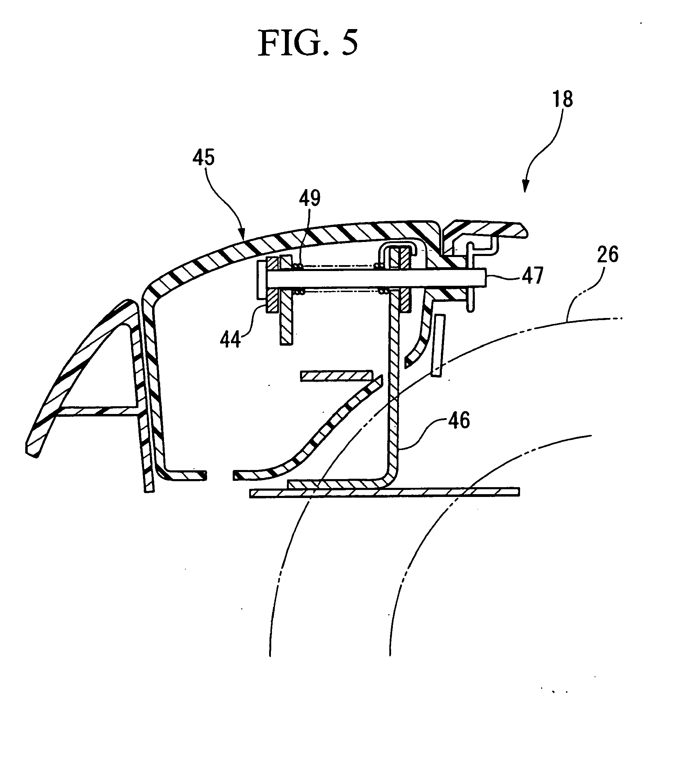

In addition, as shown in FIG. 1, on one side in the transverse direction, specifically, the right side, of the upper part of the seatback 18 in the upright position, a reclining lever (operating device) 45 is provided so as to be able to rotate centered on the support axles 47, as shown in FIG. 4 and FIG. 5. That is, as shown in FIG 5, the brackets 46 are fastened to the seatback frame 26, and the support axles 47 are supported by these brackets 46 along the transverse direction. The brackets 44 that are fastened to the reclining lever are supported on this support axle 47 so as to be able to rotate.

As shown in FIG 4, an operating plate part 48 is formed on the reclining lever 45. This operating plate part 48 extends downward along the back side 18b of the seatback 18. The passenger inserts his hand in back of this operating plate part 48 from below and pulls the operating plate part 48 backwards and upwards. By pulling in this manner, the reclining lever 45 rotates centered on the support axle 47 such that the operating plate part 48 rises from the back surface 18b of the seatback 18 (in FIG. 4, this is shown by the dotted lines). Note that as shown in FIG. 5, a spring 49 is provided that urges the reclining lever 45 such that the operating plate part 48 thereof is positioned at a predetermined position along the back surface 18b of the seatback 18 (shown by the solid line in FIG. 4). In addition, the reclining cable 50 shown in FIG. 4 is interposed between this reclining lever 45 and the reclining mechanism 41 shown in FIG. 3.

As shown in FIG 2, the supporting axles 52 extending in the transverse direction are provided at a position that is a predetermined amount higher than the supporting axles 38 of the support parts 37 (only one of them is illustrated here) of the seatback frame 26, which is in the upright position. The back part of the seat cushion frame 29 is supported by the support part 37 so as to be able to rotate. Specifically, the seat cushion frame 29 has a U-shape in a plan view, and has a pair of extended parts 54 (only one of them is illustrated here) that extend downward from each of the supporting axles 52 and then extend upward, and an installation part 55 extending in the transverse direction that links the extended distal ends of the extended parts 54 together. In addition, a seat cushion pad 28 that is located slightly toward the installation part 55 is supported by the seat cushion frame 29.

A pair of left and right brackets 57 is installed on the front end of the installation parts 55 of the seat cushion frame 29, and the support axles 58 extending in the transverse direction are provided on these brackets 57. Each of the support axles 58 supports one of the ends of each of the link arms 60 so as to be able to rotate. In addition, the supporting axles 61 extending in the transverse direction are fastened to the distal end side of each of the link arms 60. A rotating support part 62 that supports the link arms 60 so as to be able to rotate via these support axles 61 is provided in proximity to the edge of the lower floor 21 on the upper floor 22 side.

As a result of the above, the installation part 55, which is the front portion of the seat cushion frame 29, is linked to the lower floor 21. Note that on the back side of the center seat 12, a cover plate 63 that can abut with the back surface 18b of the seatback 18 of the center seat 12 is connected so as to be able to rock to the accommodation space floor 64 that is farther to the back than the center seat 12.

As shown in FIG. 3, a lock member 65 that projects downward is provided so as to be able to rise on the slider 32, and lock holes 66, what can engage the lock member 65, are formed at a predetermined pitch in the lengthwise direction on the slide rails 31. The sliders 32, that is, the center seat 12, can slide along the slide rails 31 when this lock member 65 is extracted from the lock holes 66, and the sliders 32, that is, the center seat 12, is locked on the slide rails 31 by the lock member 65 engaging the lock holes 66.

The lock members 65 are connected to the link mechanism 70. The link mechanism 70 has a link member 72 that extends along the longitudinal direction of the vehicle body, and at the same time, the back edge part thereof is supported by the slider 32 so as to be able to rotate via the support axle 71 extending in the transverse direction. At the center in the longitudinal direction, this link member 72 supports the lock member 65 so as to be able to rotate via the support axle 73 extending in the transverse direction.

In addition, the link mechanism 70 includes a link member 75 whose back bottom part links to the front end part of the link member 72 so as to be able to rotate via the support axle 74 extending in the transverse direction, and a link member 78 whose front end part links to the back upper part of the link member 75 so as to be able to rotate via the support axle 77 extending in the transverse direction. The link member 78 extends in the longitudinal direction of the vehicle body above the link member 72, and the back part of this link member 78 is connected to the slider 32 so as to be able to rotate via the support axle 79 extending in the transverse direction. The actuation input part 80 on the back edge of the link member 78 extends farther back than the support axle 79, and is positioned below the actuation cam 42, which is fastened to the support part 37 of the seatback frame 26.

In addition, the link mechanism 70 has a link member 83 whose front portion is connected so as to be able to rotate on the support axle 82, which is at the front end part of the link member 75 and aligned transversely, and the back part of this link member 83 is connected so as to be able to rotate to the slider 32 via the support axle 84 extending transversely. In addition, one end of a slide cable 83 is connected to this link member 83.

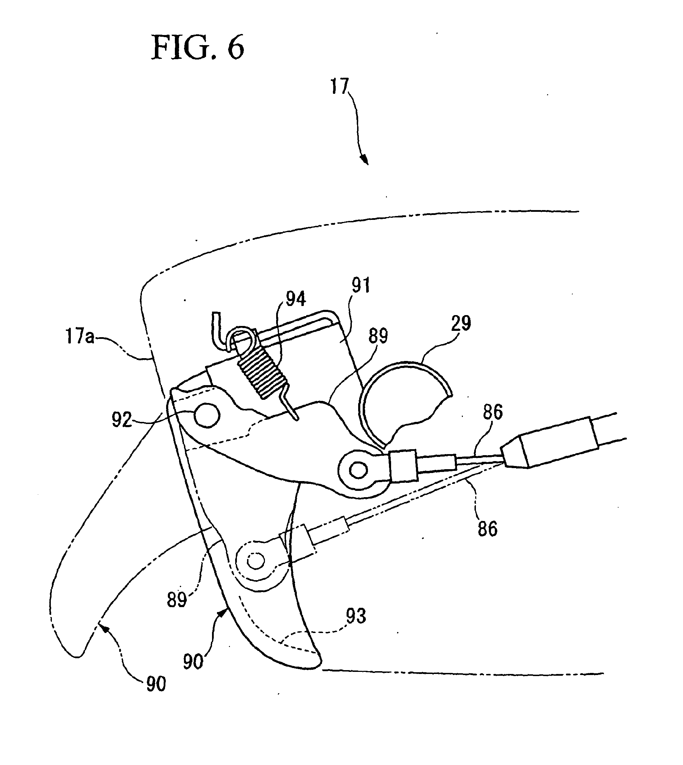

As shown in FIG. 1, a slide lever (slide lock release operating device) 90 is provided on the right side, which is the same side as the reclining lever 45, and on the front lower part of the seat cushion 17. The other end of the slide cable 86 is connected to the bracket 89 shown in FIG. 6, which is fastened to this slide lever 90. The slide lever 90 is rotatably supported, at a bracket 89 that is fastened thereto, by the bracket 91 that is fastened to the seat cushion frame 29, via the support axle 92 extending in the transverse direction.

An operating plate part 93 is formed on the slide bar 90. The operating plate part 93 extends downward along the front surface 17a of the seat cushion 17 and extended distal end side thereof is slightly curved toward the back. The passenger inserts his hand from below in back of the operating plate part 93, and pulls this operating plate part 93 forward. By pulling in this manner, the slide bar 90 rotates centered on the support axle 92 such that the operating plate part 93 moves forward (shown by the chain line in FIG 6). Note that between the bracket 91 and the bracket 89, a spring 94 is provided that urges the slide bar 90 such that this operating plate part 93 is positioned at a predetermined position along the front surface 17a of the seat cushion 17 (shown by the solid line in FIG. 6).

Next, the operation of the center seat 12 will be explained.

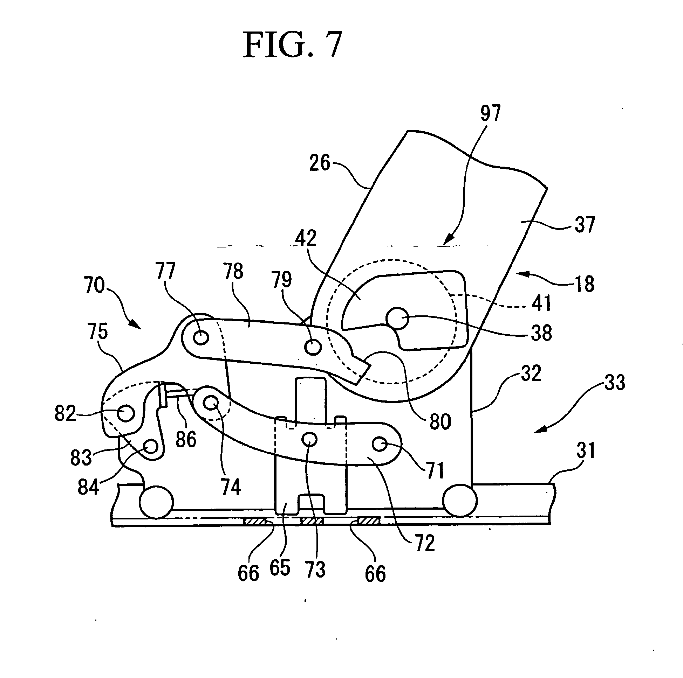

As shown, for example, in FIG. 2, when the slide lever 90 shown in FIG 6 is rotated because the operating plate part 93 is pulled forward by the passenger from the state in which the seatback frame 26, that is, the seatback 18, is fastened to the slider 32 by the reclining mechanism 41 in the upright position (the reclining lever 45 is in the home position here), the slide cable 86 having one end connected thereto is pulled, and from the state shown in FIG 3, the link member 83 of the link mechanism 70 connected to the other end of this slide cable 86, as shown in FIG 7, is rotated centered on the support axle 84 such that the front end part is positioned at the upper side. Thereby, the support axle 82, which is provided on the front end part of the link member 83, raises, and the link part 75, which is connected to the support axle 82, rocks the link member 72 such that the front side rises centered on the support axle 71 and rocks the link member 78 such that the front side rises centered on the support axle 79.

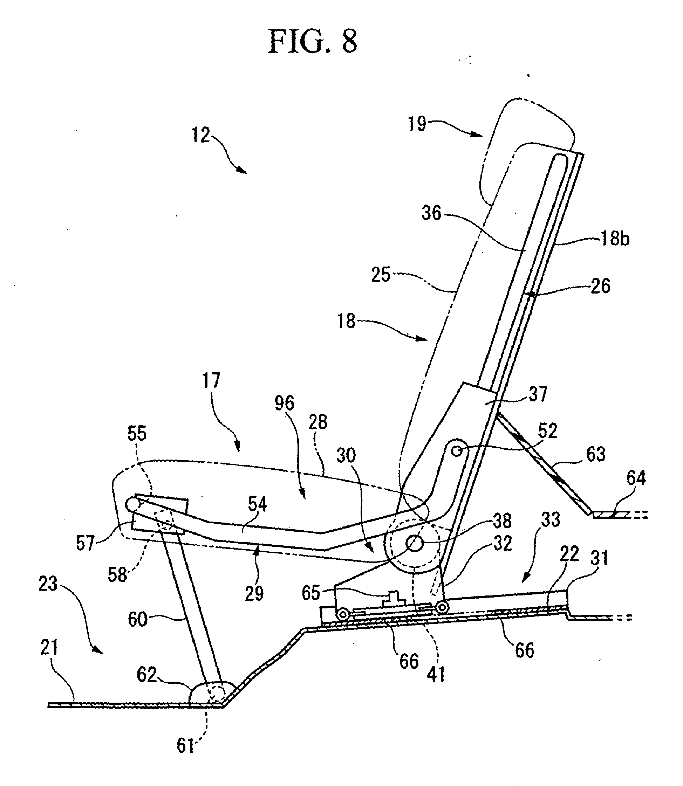

In addition, due to the rocking of the link member 72 at this time, the lock member 65, which is supported by the support axle 73 at the center part of this link member 72, rises to be extracted from the lock hole 66 of the slide rail 31, and the slide lock of the slider 32 is released. In this state, the slider 32 is guided by the slide rail 31, and can slide from the back end position of the sliding range shown in FIG. 2 to the front end position of the sliding range shown in FIG. 8.

When the slider 32 slides along the slide rail 31, the seatback 18, which is fastened to the slider 32, slides while maintaining orientation thereof. On the other hand, the seat cushion 17, which is rotatably connected to the support axle 52 of the seatback 18, slides as the front portion moves slightly vertically so as to trace the locus of an arc due to rotating the link arm 60, which is rotatably connected to the support axle 58 located at a front portion of the seat cushion 17, centered on the support axle 61, which is supported by the rotation support part 62. In addition, the case of sliding toward the back is identical.

In addition, when the passenger releases the operation of the slide lever 90 when the center seat 12 has stopped at an appropriate position, the slide bar 90 returns to the home position due to the urging force of the spring 94, the link mechanism 70 moves in an action that is the reverse of that described above, the lock member 65 is lowered and engaged in the lock hole 66, and the center seat 12 is locked in this position.

In addition, for example, as shown in FIG. 8, when the operating plate part 48 of the reclining lever 45 on the top of the seatback 18, shown in FIG. 4 and FIG 5, is pulled back and up by the passenger while the center seat 12 is positioned at the front end position of the slide rail 31, the reclining lever 45 rotates centered on the support axle 47. When the reclining lever 45 is rotated in this manner, the reclining cable 50, which is connected to one end thereof, is pulled, and the reclining mechanism 41, which is connected to the other end of this reclining cable 50, releases the anchoring of the seatback frame 26 from the slider 32. Thereby, the seatback frame 26, that is, the seatback 18, which was in an upright position, can be tilted forward.

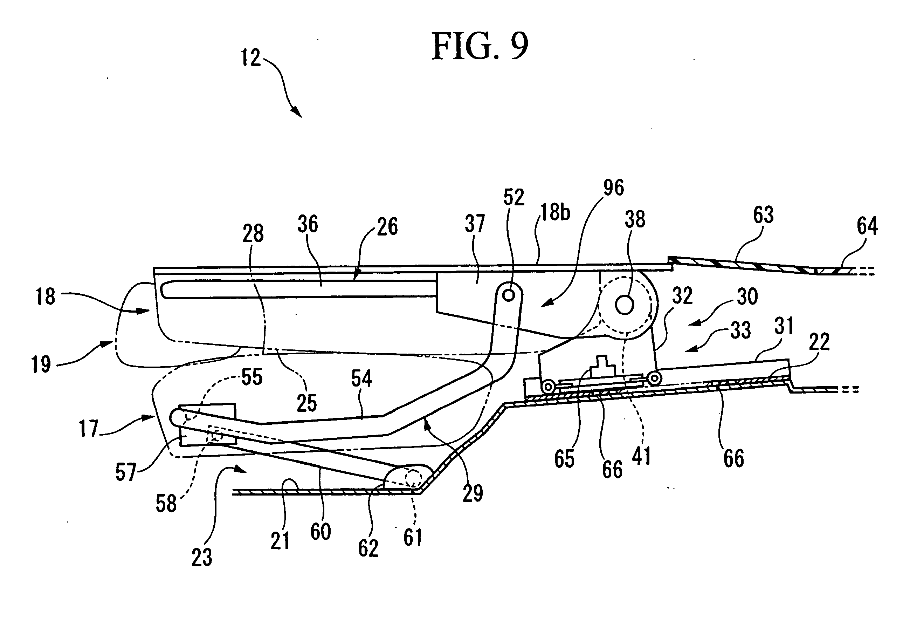

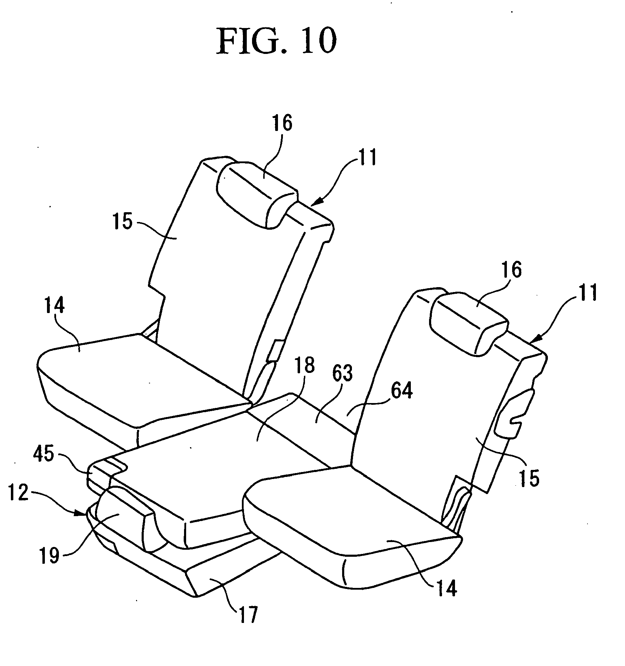

When the seatback 18 is tilted forward while the slider 32, that is, the center seat 12, is positioned at the front position of the sliding range, the support axle 52, which is positioned further above the support axle 38 in the seatback 18, is moved from the position shown in FIG. 8 forward and downward, as shown in FIG 9. As a result, the back part of the seat cushion frame 29, which is connected to the support axle 52, is moved forward and down, and at the same time, the front portion of the seat cushion frame 29 is moved forward and down by tilting forward the link arm 60 at the front portion, which is connected to the support axle 58 so as to be able to rotate, centered on the support axle 61 that is supported by the rotation support part 62. Thereby, the entire seat cushion frame 29 is moved forward and down, the seat cushion pad 28 supported thereby is also moved forward and down, and moved toward the lower floor 21, as shown in FIG 9 and FIG. 10 (the move-down operation).

The seatback 18 is aligned over the seat cushion 17, and the upper surface thereof is substantially horizontal. Accompanying this, the cover plate 63, which abuts the back surface 18b of the seatback 18 of the center seat 12, is arranged substantially horizontal, and the accommodation space floor 21, the cover plate 63, and the center seat 12 become substantially flat. Note that, when the center seat 12 is at the forward position of the sliding range in this manner, the move-down operation toward the lower floor 21 is enabled. When the center seat 12 is at the middle position or back position of the sliding range, the seat cushion 17 is on the upper floor 22, and the move-down operation is not possible.

The support axle 52, the seat cushion frame 29, the bracket 57, the support axle 58, the link arm 60, the support axle 61, and the rotation support part 62 form the dive down interlocking mechanism (the dive down interlocking device) 96 that interlocks the move-down operation of the center seat 12 toward the lower floor 21 and the forward tilting operation of the seatback 18 of the center seat 12. This dive down interlocking mechanism 96 enables the forward tilting operation of the seatback 18 and the move-down operation of the center seat 12 toward the lower floor 21 by only the operation of the reclining lever 45 provided in the upper part of the seatback 18, as described above.

On the other hand, while the slider 32, that is, the center seat 12, is at a position other than the forward position of the sliding range, that is, when the slider 32 is positioned at the center position or the back end position, as described above, the seatback frame 26, that is, the seatback 18, which was in the upright position, can be tilted forward when the reclining bar 45 on the upper part of the seatback 18, shown in FIG 4 and FIG. 5, is rotated by the operating plate part 48 thereof being pulled back and upward.

When the seatback 18 in this state is tilted forward, at the beginning, from the state shown in FIG. 3, the actuating cam 42, which is fastened to the support part 37 of the seatback frame 26, pushes the operation part 80 of the link member 78 of the link mechanism 70 downward by rotating integrally with the seatback frame 26.

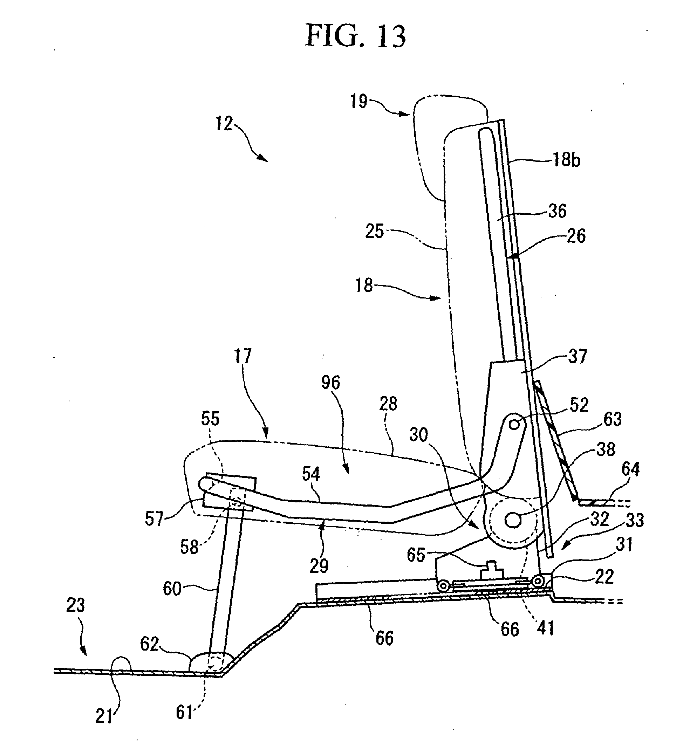

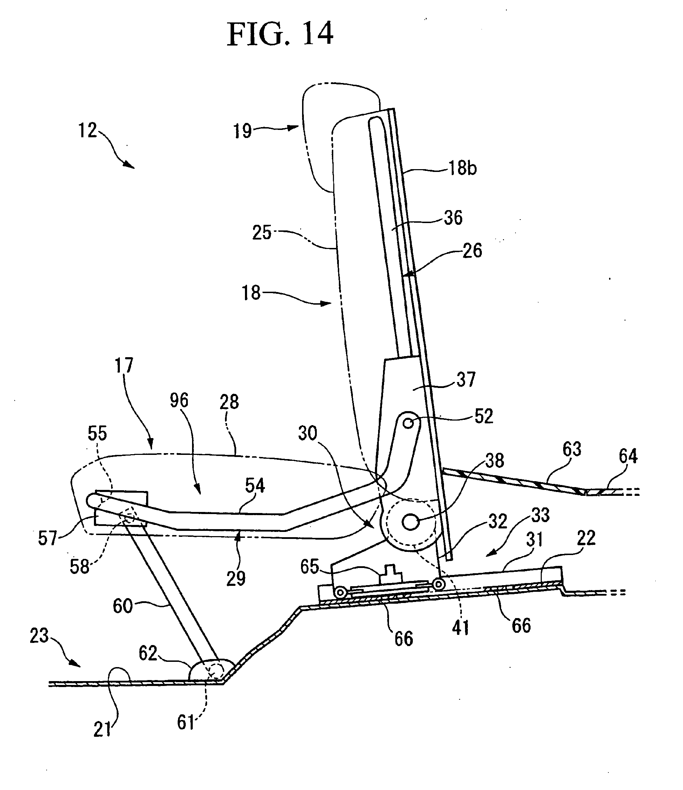

Thereby, the link member 78 rotates such that the front portion is raised up centered on the center support axis 79, and the link member 75 is raised via the support axle 77 at the front portion of the link member 78. By raising the link member 75 in this manner, the front end part of the link member 72, which is connected to the lower part of the link member 75 via the support axle 74, is also raised, and the link member 72 rotates centered on the support axle 71. Thereby, the support axle 73 at the middle of the link member 72 is also raised, and the lock member 65 is raised and extracted from the lock hole 66 of the slide rail 31 to release the slide lock. As a result, the slider 32 is able to slide, and thereby, a passenger easily slides the center seat 12 forward from the position shown in FIG 13 by the guidance of the slide rails 31, which incline downward, as shown in FIG. 14.

The actuating cam 42 and the link mechanism 70 form the slide lock release mechanism (slide lock releasing device) 97, which releases the slide lock due to being interlocked with the forward tilting operation of the seatback 18.

In addition, when the forward tilting operation of the seatback 18 further progresses, the entire seat cushion frame 29 moves forward and down, as shown in FIG. 9, from the position shown in FIG. 14, and the move-down operation, in which the supported seat cushion 25 also moves forward and down toward the lower floor 21, is carried out.

Specifically, when the seatback 18 is tilted forward from the upright position by the operation of the reclining lever 45, in the first step, the slide lock release mechanism 97 releases the slide lock on the center seat 12, and thereby, the center seat 12 slides up to the front end position along the slide rails 31, which incline downward. When the forward tilting operation of the seatback 18 has progressed further, the dive down interlocking mechanism 96 moves down the center seat 12 toward the lower floor 21.

When the reclining lever 45 provided on the upper part of the seatback 18 is operated while the center seat 12 of the present embodiment described above is, for example, at the forward end position, the lock on the seatback 18 is released by the reclining mechanism 41, and as a result, the dive down interlocking mechanism 96 allows the forward tilting operation of the interlocking seatback 18 and the move-down operation of the center seat 12 toward the lower floor 21. Thereby, because in this state the seatback 18 is tilted forward, the center seat 12 is accommodated by being moved toward the lower floor 21 while the seatback 18 is tilted forward. In this manner, by a single operation of the reclining lever 45, the forward tilting operation of the seatback 18 and the move-down operation of the center seat 12 toward the lower floor 21, which are interlocked, are enabled, and thus the operation during the dive down accommodation can be simplified.

In addition, for example, when the reclining lever 45 provided on the upper part of the seatback 18 is operated while the center seat 12 is in the center position or the back end position, the lock on the seatback 18 is released by the reclining mechanism 41, and as a result, the dive down interlocking mechanism enables the forward tilting operation of the seatback 18 and the move-down operation of the center seat 12 toward the lower floor 21, which are interlocked. In addition, when the seatback 18 in this position is tilted forward, the slide lock release mechanism 97 releases the slide lock, and the sliding of the center seat 12 to the front end position is enabled automatically. Thus, in this position, by sliding the center seat 12 up to the front end position and further tilting forward the seatback 18, fmally, while the seatback 18 is tilted forward, the center seat 12 is accommodated by being moved toward the lower floor 21. In this manner, by the single operation of the reclining lever 45, the forward tilting operation of the seatback 18, the sliding of the center seat 12 to the front end position, and the movement of the center seat 12 toward the lower floor 21 are enabled. Therefore, when the sliding is enabled and the center seat 12 is at the front end position of the slide and the movement toward the lower floor become possible, the operation during the dive down accommodation can be simplified.

In addition, because the slide rails 31 incline downward, the sliding of the center seat 12 to the front end position is facilitated, and as a result, the operation during the dive down accommodation becomes even easier.

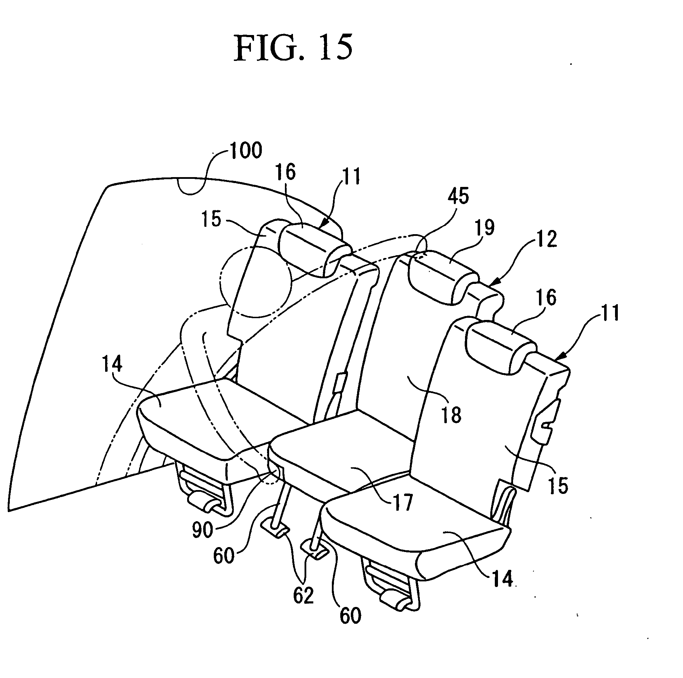

In the embodiment described above, the slide lock release mechanism 97 described above can be omitted. In this case, when the reclining lever 45 provided on the upper part of the seatback 18 is operated, the dive down interlocking mechanism 96 enables the forward tilting operation of the seatback 18 and the move-down operation of the center seat 12 toward the lower floor 21, which are interlocked. In contrast, when the slide lever 90 provided on the front portion of the seat cushion 17 is operated, the slide lock is released, and the sliding of the center seat 12 to the front end position is enabled. Thus, as shown in FIG. 15, while the passenger grasps the reclining lever 45 with one hand from the door opening 100 on the right side and grasps the slide lever 90 with the other hand, the center seat 12 is slid up to the front end position by operating the slide lever 90 and the seatback 18 is tilted forward by operating the reclining lever 45. Thereby, the center seat 12 is accommodated by being moved toward the lower floor 21 while the seatback 18 is tilted forward. The slide lever 90 is provided on the front portion of the seat cushion 17 and the reclining lever 45 is provided on the upper part of the seatback 18. Thereby, the passenger can grasp these from the side door opening 100 simultaneously and without effort, and furthermore, in this condition, the operation for sliding forward and the forward tilting operation of the seatback 18 are simplified. Therefore, in the case in which the slide lock release mechanism 97 described above is omitted in the center seat 12, even when the center seat 12 can be moved down toward the lower floor 21 while sliding is possible and it is at the front end position of the slide, the operation during the dive down accommodation can be simplified.

In this case, because the reclining lever 45 and the slide lever 90 are provided on the same side in the transverse direction of the vehicle, the passenger can more easily and simultaneously grasp them, and the operation during the dive down accommodation can be further simplified.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

A seat for a vehicle, includes: a seat cushion (17); a front support member (60) movably supporting the seat cushion (17) on a lower floor (21) of the vehicle; a seatback (18); a seatback support device (30) movably supporting the seatback (18) on an upper floor (22) located backward in the vehicle with respect to the lower floor (21); a dive down interlocking device (96) connected to the seat cushion (17) and the seatback (18), and adapted to move the seat cushion (17) toward the lower floor (21) when the seatback (18) is pivoted forward in the vehicle; and an operating device (45) provided on an upper portion of the seatback (18), and operatively connected to the dive down interlocking device (96).

## Claims

1. A seat for a vehicle, comprising:
a seat cushion (17);
a front support member (60) movably supporting the seat cushion (17) on a lower floor (21) of the vehicle;
a seatback (18);
a seatback support device (30) movably supporting the seatback (18) on an upper floor (22) located backward in the vehicle with respect to the lower floor (21);
a dive down interlocking device (96) connected to the seat cushion (17) and the seatback (18), and adapted to move the seat cushion (17) toward the lower floor (21) when the seatback (18) is pivoted forward in the vehicle; and
an operating device (45) provided on an upper portion of the seatback (18), and operatively connected to the dive down interlocking device (96),
wherein the seatback support device (30) comprises:
a support (38) pivotably supporting the seatback (18); and
a sliding device (33) attached to the upper floor (22) to slidably support the support (38), and having a locking mechanism (65, 66); **characterized by** a slide lock releasing device (97) connected to the locking mechanism (65, 66), and adapted to release locking by the locking mechanism (65, 66) when the seatback (18) is pivoted forward in the vehicle.

2. A seat for a vehicle, according to claim 1, wherein the sliding device (33) comprises:
a slide rail (31) fixed to the upper floor (22); and
a slider (32) supporting the support (38), and movable along the slide rail (31).

3. A seat for a vehicle, according to claim 2, wherein the slide rail (31) inclines such that a front portion of the slide rail (31) is located lower in the vehicle than a rear portion thereof.

4. A seat for a vehicle, according to claim 2, wherein the seat cushion (17) is movable toward the lower floor (21) when the slider (32) is located at a frontmost position with respect to the slide rail (31).

5. A seat for a vehicle, according to any one of claims 1 to 4, further comprising: a slide lock release operating device (90) provided at a front portion of the seat cushion (17), and connected to the locking mechanism (65, 66) to release locking by the locking mechanism (65, 66).

6. A seat for a vehicle, according to claim 1, wherein the operating device (45) and the slide lock release operating device (90) are disposed in the same side in a lateral direction of the vehicle.

## Patentansprüche

1. Sitz für ein Fahrzeug, umfassend:
ein Sitzpolster (17);
ein vorderes Lagerelement (60), das das Sitzpolster (17) auf einem unteren Boden (21) des Fahrzeugs bewegbar lagert;
eine Sitzlehne (18);
eine Sitzlehnenlagervorrichtung (30), die die Sitzlehne (18) auf einem oberen Boden (22) bewegbar lagert, der in Bezug auf den unteren Boden (21) im Fahrzeug hinten angeordnet ist;
eine Absenk-Kopplungsvorrichtung (96), die mit dem Sitzpolster (17) und der Sitzlehne (18) verbunden ist und dazu ausgelegt ist, das Sitzpolster (17) zum unteren Boden (21) hin zu bewegen, wenn die Sitzlehne (18) im Fahrzeug nach vorne verschwenkt wird; und
eine Betätigungsvorrichtung (45), die an einem oberen Abschnitt der Sitzlehne (18) vorgesehen ist und mit der Absenk-Kopplungsvorrichtung (96) betriebsmäßig verbunden ist,
wobei die Sitzlehnenlagervorrichtung (30) umfasst:
ein Lager (38), das die Sitzlehne (18) schwenkbar trägt; und
eine Gleitvorrichtung (33), die an dem oberen Boden (22) angebracht ist, um das Lager (38) verschiebbar zu lagern, und die einen Sperrmechanismus (65, 66) aufweist;
**gekennzeichnet durch** eine Gleitsperrenlösevorrichtung (97), die mit dem Sperrmechanismus (65, 66) verbunden und dazu ausgelegt ist, die Sperre **durch** den Sperrmechanismus (65, 66) zu lösen, wenn die Sitzlehne (18) im Fahrzeug nach vorne verschwenkt wird.

2. Sitz für ein Fahrzeug nach Anspruch 1, worin die Gleitvorrichtung (33) umfasst:
eine Gleitschiene (31), die an dem oberen Boden (22) befestigt ist; und
einen Schieber (32), der das Lager (38) trägt und entlang der Gleitschiene (31) bewegbar ist.

3. Sitz für ein Fahrzeug nach Anspruch 2, worin die Gleitschiene (31) derart geneigt ist, dass ein vorderer Abschnitt der Gleitschiene (31) in dem Fahrzeug niedriger angeordnet ist als ihr hinterer Abschnitt.

4. Sitz für ein Fahrzeug nach Anspruch 2, worin das Sitzpolster (17) zu dem unteren Boden (21) hin bewegbar ist, wenn der Schieber (32) in Bezug auf die Sitzschiene (31) an einer vordersten Position angeordnet ist.

5. Sitz für ein Fahrzeug nach einem der Ansprüche 1 bis 4, ferner umfassend:
eine Gleitsperrenlösebetätigungsvorrichtung (90), die an einem vorderen Abschnitt des Sitzpolsters (17) vorgesehen ist und mit dem Sperrmechanismus (65, 66) verbunden ist, um die Sperre durch den Sperrmechanismus (65, 66) zu lösen.

6. Sitz für ein Fahrzeug nach Anspruch 1, worin die Betätigungsvorrichtung (45) und die Gleitsperrenlösebetätigungsvorrichtung (90) in seitlicher Richtung des Fahrzeugs an derselben Seite angeordnet sind.

## Revendications

1. Siège pour un véhicule, comprenant :
un coussin de siège (17) ;
un élément de support avant (60) supportant de manière mobile le coussin de siège (17) sur un plancher inférieur (21) du véhicule ;
un dossier de siège (18) ;
un dispositif de support de dossier de siège (30) supportant de manière mobile le dossier de siège (18) sur un plancher supérieur (22) situé vers l'arrière dans le véhicule par rapport au plancher inférieur (21) ;
un dispositif de verrouillage d'abaissement (96) relié au coussin de siège (17) et au dossier de siège (18), et adapté pour déplacer le coussin de siège (17) vers le plancher inférieur (21) lorsque le dossier de siège (18) est pivoté vers l'avant dans le véhicule ; et
un dispositif d'actionnement (45) prévu sur une partie supérieure du dossier de siège (18), et relié de manière fonctionnelle au dispositif de verrouillage d'abaissement (96),
dans lequel le dispositif de support de dossier de siège (30) comprend :
un support (38) supportant de manière pivotante le dossier de siège (18) ; et
un dispositif de coulissement (33) fixé au plancher supérieur (22) pour supporter de manière coulissante le support (38), et comportant un mécanisme de verrouillage (65, 66) ;
**caractérisé par** un dispositif de libération de verrouillage de coulissement (97) relié au mécanisme de verrouillage (65, 66), et adapté pour libérer le verrouillage effectué par le mécanisme de verrouillage (65, 66) lorsque le dossier de siège (18) est pivoté vers l'avant dans le véhicule.

2. Siège pour un véhicule selon la revendication 1, dans lequel le dispositif de coulissement (33) comprend :
un rail de coulissement (31) fixé au plancher supérieur (22) ; et
un coulisseau (32) supportant le support (38), et mobile le long du rail de coulissement (31).

3. Siège pour un véhicule selon la revendication 2, dans lequel le rail de coulissement (31) s'incline de sorte qu'une partie avant du rail de coulissement (31) est située plus bas dans le véhicule qu'une partie arrière de celui-ci.

4. Siège pour un véhicule selon la revendication 2, dans lequel le coussin de siège (17) peut être déplacé vers le plancher inférieur (21) lorsque le coulisseau (32) est situé à une position la plus en avant par rapport au rail de coulissement (31).

5. Siège pour un véhicule selon l'une quelconque des revendications 1 à 4, comprenant en outre : un dispositif d'actionnement de libération de verrouillage de coulissement (90) prévu au niveau d'une partie avant du coussin de siège (17), et relié au mécanisme de verrouillage (65, 66) pour libérer le verrouillage effectué par le mécanisme de verrouillage (65, 66).

6. Siège pour un véhicule selon la revendication 1, dans lequel le dispositif d'actionnement (45) et le dispositif d'actionnement de libération de verrouillage de coulissement (90) sont disposés du même côté dans une direction latérale du véhicule.
